Europäisches Patentamt

European Patent Office

Office européen des brevets

(19)

(11) Numéro de publication: **0 019 513**
**B1**

(12) **FASCICULE DE BREVET EUROPEEN**

(45) Date de publication du fascicule du brevet: **13.02.85**

(51) Int. Cl.⁴: **G 06 K 7/08**

(21) Numéro de dépôt: **80400587.4**

(22) Date de dépôt: **29.04.80**

(54) Dispositif de visualisation de signaux électriques enregistrés sur support magnétique.

(30) Priorité: **10.05.79 FR 7911854**

(43) Date de publication de la demande:
**26.11.80 Bulletin 80/24**

(45) Mention de la délivrance du brevet:
**13.02.85 Bulletin 85/07**

(84) Etats contractants désignés:
**DE GB IT**

(56) Documents cités:
**GB-A-1 427 517**
**US-A-2 530 564**
**US-A-3 181 059**
**US-A-4 101 905**

**IBM TECHNICAL DISCLOSURE BULLETIN vol.
4, no. 1, juin 1961 Armonk N.Y. US E.S.
MATHISEN: "Bit Viewer Arresting Menas",
pages 14 et 15**

(73) Titulaire: **L.C.C.-C.I.C.E. - COMPAGNIE
EUROPEENNE DE COMPOSANTS
ELECTRONIQUES**
**50, rue Jean-Pierre Timbaud B.P. 301**
**F-92402 Courbevoie (FR)**

(72) Inventeur: **Chabrolle, Jacques**
**"THOMSON-CSF" SCPI - 173, Bld. Haussmann**
**F-75360 Paris Cedex 08 (FR)**

(74) Mandataire: **Wang, Pierre et al**
**THOMSON-CSF SCPI 173, Bld Haussmann**
**F-75379 Paris Cedex 08 (FR)**

Courier Press, Leamington Spa, England.

## Description

La présente invention concerne un moyen de visualisation et de mémorisation des informations enregistrées sur un support magnétique tel qu'un ruban ou une carte magnétique. Elle concerne plus particulièrement un dispositif du type "loupe", à poser sur le support enregistré, qui fait apparaître les informations magnétiques par déplacement d'un solide pulvérulent.

L'enregistrement magnétique est un moyen de traitement ou de stockage d'informations extrêmement commode, actuellement très répandu. On sait manipuler, ou transformer en signaux magnétiques, toutes sortes d'informations, qu'elles soient analogiques ou numériques. L'intérêt de la transformation de données en signaux magnétiques est rehaussé par les avantages des supports d'enregistrement, variés et économiques, dont la gamme va de la mémoire magnétique d'ordinateur ou de la conservation sur bande d'images de télévision jusqu'à la simple piste d'identification sur carte, badge ou titre de transport par exemple. Cependant, tous ces supports, ou de façon plus précise l'enregistrement magnétique, souffrent d'un inconvénient primordial par rapport à d'autres moyens de mise en mémoire: le contenu n'est pas visible à l'oeil humain.

L'invention représente un moyen simple qui permet de voir les informations magnétiques sur leur support, et d'en conserver l'image après que la "loupe" a été éloignée du support d'enregistrement. Par convention, et dans le seul but d'alléger le texte qui suit et les explications afférentes, le terme "loupe" désigne dans ce qui suit le moyen de visualisation d'informations magnétiques, selon l'invention.

Les dispositifs de visualisation (ou "loupe magnétique") de l'art antérieur, soit sont dépourvus d'effet mémoire (FR—1 238 490, US—3 181 059, US—2 530 564), soit, lorsqu'ils en possèdent un (US—4 101 905, IBL TECHNICAL DISCLOSURE, volume 4, N° 1, juin 1961, pages 14 et 15, GB—1 427 517), nécessitent des dispositifs annexes d'effacement avant toute réécriture. Plus spécifiquement, les dispositifs décrits dans les brevets US—4 101 905 et GB—1 427 517 ne peuvent être effacés que par un aimant et le dispositif décrit dans l'article "IBM TECHNICAL DISCLOSURE", nécessite une installation pneumatique spéciale pour créer une sorte d'onde de choc nécessaire à l'effacement. L'utilisation d'un aimant ou d'un champ magnétique d'effacement a notamment pour inconvénient que celui-ci peut être mis accidentellement en contact avec le support enregistré, d'où effacement possible de celui-ci. D'autre part, l'installation pneumatique prévue par l'article IBM (TECHNICAL DISCLOSURE BULLETIN, volume 4, N° 1, juin 1961, pages 14 et 15) est d'une complication disproportionnée avec le but poursuivi.

L'invention concerne donc un dispositif de visualisation qui répond simultanément à tous les critères souhaitables pour une utilisation pratique. Un tel dispositif présente, en effet, de manière connue en soi, un effet de mémoire lorsqu'il est éloigné du support enregistré, mais il est, en outre, facilement effaçable, de telle sorte qu'il reste disponible pour de nouvelles opérations d'écriture.

L'invention concerne donc un dispositif de visualisation de signaux enregistrés sur un support magnétique comprenant un bloc rigide de matériau transparent amagnétique bordant une cavité étanche fermée par une membrane disposée du côté où le dispositif est destiné à être mis en contact avec le support magnétique, ladite cavité contenant une suspension liquide comprenant des particules fortement ferro-magnétiques se déplaçant sous l'action du champ magnétique du support magnétique lorsque le dispositif est placé à proximité de celui-ci, de manière à visualiser l'information magnétique grâce à la formation d'amas stables dans le temps séparés par des régions dépourvues de particules, la visualisation étant effaçable en remettant en suspension les particules.

Selon une première variante, les particules sont en ferrite doux et la cavité est fermée par une membrane souple de telle sorte que la visualisation soit effaçable par passage d'un doigt sur la membrane souple, sans recours à aucun dispositif annexe.

Selon une deuxième variante, la suspension liquide comprend des particules de ferrite doux de composition ternaire contenant (en moles) de 50 à 60% de $Fe_2O_3$, de 20 à 40% de MnO et de 10 à 30% de ZnO, de telle sorte que la visualisation soit effaçable par mise en mouvement du liquide.

Les particules de ferrite doux peuvent avoir une granulométrie comprise entre 0,02 et 10 microns et la suspension peut contenir entre 1 et 15 mg de poudre de ferrite doux pour 500 mg de liquide.

La membrane souple peut avoir une épaisseur comprise entre 5 et 100 microns et être en polymère organique, notamment métallisé sur sa face tournée vers la cavité, ou bien métallique.

On notera pour éviter toute confusion que le terme "fortement ferro-magnétique" utilisé dans la présente demande signifie "fortement ferromagnétique" par référence à l'oxyde de fer alpha.

L'invention sera mieux comprise grâce aux explications qui suivent, lesquelles s'appuient sur les figures qui représentent:

— figure 1: un appareil de visualisation décrit dans le brevet français 1 238 490;

— figure 2: une vue en coupe de la couche sensible de l'appareil connu;

— figure 3: une vue en coupe de l'appareil selon l'invention;

— figure 4: une vue en coupe de la couche sensible de l'invention.

La figure 1 représente un moyen de visualisation d'informations magnétiques, décrit dans le brevet français n° 1 238 490.

Dans une plaque 1, en verre minéral ou organique, transparente, est ménagée une cavité 2, dont la profondeur est plus faible que l'épaisseur de la plaque 1. Accessoirement, cette cavité est séparée en bandes par des parties 3, et elle comporte des réserves 4; cependant, le dispositif reste conforme à lui-même si la cavité ne comprend ni bandes, ni réserves, et est circulaire, par exemple. Une plaque de verre 5 est maintenue — par collage par exemple — contre la plaque 1, fermant ainsi la cavité 2, puisqu'il a été précisé que cette cavité n'est pas aussi profonde que la plaque 1 est épaisse.

Une autre plaque 6, montée sur charnière, constitue un moyen de pression du support magnétique à lire contre le dispositif.

La cavité 2 est remplie, par des moyens appropriés, d'une suspension liquide, composée de fines particules d'oxyde de fer $Fe_2O_3$ alpha, maintenues en suspension par une faible proportion d'agent mouillant.

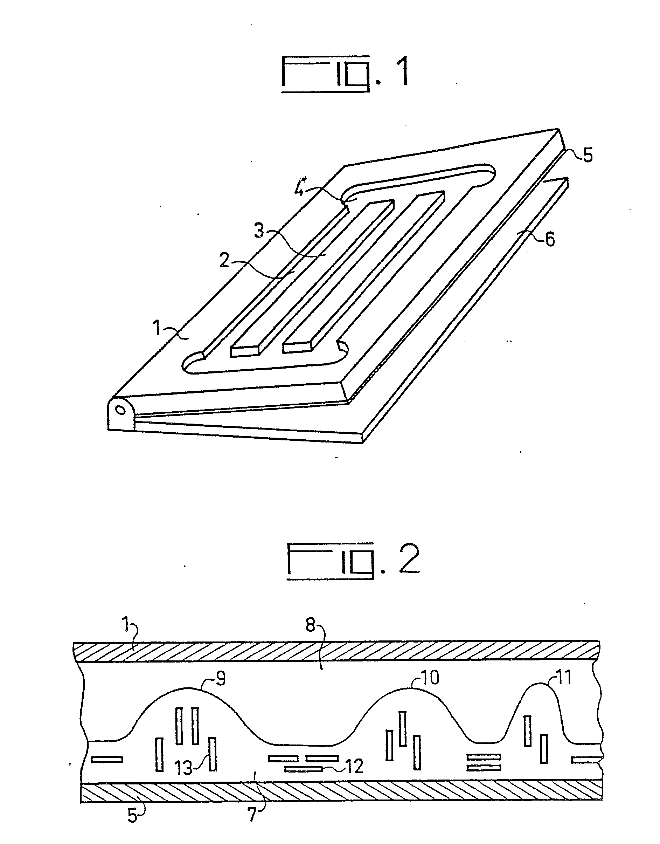

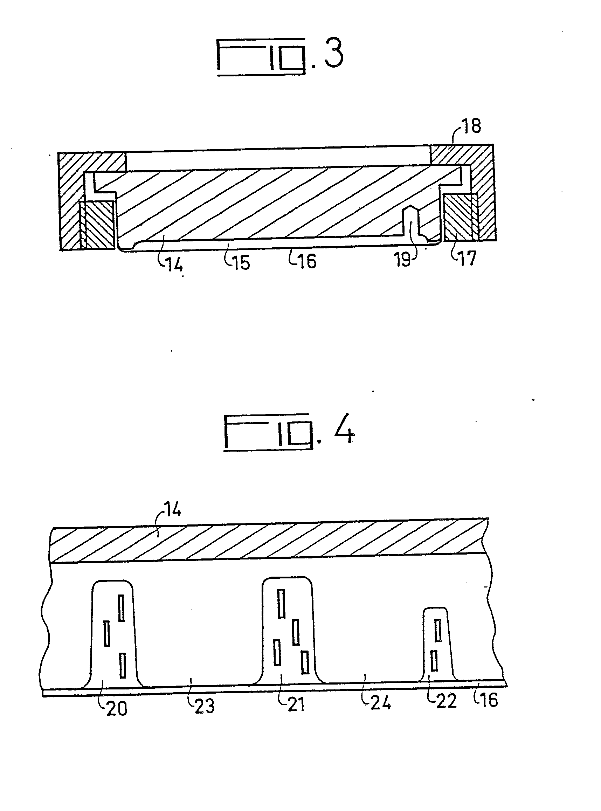

La figure 2, représente une vue en coupe de la couche sensible, au cours d'une lecture d'enregistrement.

Entre les plaques de verre 1 et 5 se trouve enfermée une suspension de particules 7 dans de l'eau 8, les particules se déposant rapidement dès que le dispositif n'est plus agité. Le support magnétique placé contre la plaque inférieure 5 contient, par exemple, trois signaux magnétiques situés dans les zones 9, 10, 11.

Les cristaux d'oxyde de fer $Fe_2O_3$ alpha sont représentés, de façon conventionnelle, par des bâtonnets 12 et 13. Dans la réalité, ce sont effectivement des cristaux plats, visibles — c'est à dire qu'ils sont colorés en rouge et non transparents — et faiblement ferromagnétiques. En suspension, ils s'orientent et s'alignent d'eux-mêmes dans le champs magnétique, et présentent ainsi un degré de réflexion de la lumière incidente nettement différenciée. Ainsi, les cristaux tels que 12, situés dans une zone où il n'y a pas de champ magnétique, sont déposés sur la plaque 5, tandis que les cristaux tels que 13, situés dans le champ magnétique d'un signal enregistré, s'orientent selon les lignes de champ. Les cristaux ne se déplacent pas, mais s'orientent sur place.

Ce moyen de visualisation a cependant de graves inconvénients: la lecture en est difficile, car la couche d'oxyde de fer ne présente pas de discontinuités. En s'orientant, les cristaux forment des irrégularités à la surface de la couche pulvérulente, de sorte que la lecture se fait plus aisément par l'ombre portée des ondulations 9, 10, 11 de la surface que par le changement de réflexion de la lumière dans ces mêmes zones.

De plus, les cristaux ne se déplacent pas, mais changent de position: dès que le dispositif est retiré du support magnétique, la visualisation s'efface, et il n'y a aucun effet de mémoire.

Le dispositif de visualisation selon l'invention présente une lecture aisée, et conserve en mémoire les informations magnétiques lues, et est en outre effaçable facilement sans necessiter de dispositif annexe.

La figure 3 représente une coupe de la loupe selon l'invention, qui est préférentiellement de forme circulaire, mais sans que ceci soit restrictif, car la forme peut être adaptée à celle des supports magnétiques à lire.

Structurellement, la loupe comporte un bloc 14 en matériau rigide transparent, verre minéral ou organique, dans lequel est ménagé une cavité 15 peu profonde, fermé par une membrane 16 d'un produit organique ou métallique mais non magnétique. Des pièces annexes 17 et 18 assurent la fermeture mécanique de l'ensemble, la pièce 17 servant à tendre et maintenir la membrane 16, tandis que le pièce 18 comprime le bloc 14 contre la pièce 17, en vue de l'étanchéité du dispositif. De plus, une cavité 19 est ménagée sur le bord de la cavité, dans le bloc 14: de profondeur moindre que l'épaisseur du bloc 14, elle constitue à la fois une réserve de liquide et un piège pour les bulles d'air qui pourraient demeurer dans le dispositif, comme cela sera exposé ultérieurement.

Dans des réalisations préférées de la loupe, la profondeur de l'embrêvement 15 est de l'ordre de quelques centièmes de millimètre, et l'épaisseur de la membrane 16 est comprise, selon le matériau utilisé, entre 5 et 100 microns.

La membrane 16 est avantageusement métallisée sur sa face interne à la loupe. La métallisation, trop fine pour faire obstacle au champ magnétique des signaux enregistrés, joue le rôle d'un miroir, ce qui améliore considérablement la qualité de l'image obtenue.

La loupe est déposée sur le support d'enregistrement, bande ou carte magnétique, qui vient prendre appui contre la membrane 16: les signaux enregistrés ne sont éloignés de la couche sensible que de l'épaisseur de la membrane, soit de 5 à 100 microns.

Le volume de la cavité 15, fermé par une membrane étanche est rempli par une suspension de solides en poudre dans de l'eau additionnée d'agents tensio-actifs dont la fonction est de maintenir les particules de poudre mouillées par l'eau et en suspension, ainsi qu'éviter la formation de mousses. Cette suspension forme la couche sensible, ou film révélateur.

Le solide en suspension est un ferrite doux, beaucoup plus ferromagnétique que l'oxyde de fer $Fe_2O_3$ alpha qui est un matériau faiblement ferromagnétique. Parmi ceux qui sont possibles, un ferrite contenant des oxydes de manganèse et de zinc donne d'excellents résultats, pour une granulométrie comprise entre quelques centièmes de microns (0,02) et quelques microns (10).

La granulométrie du ferrite doux, et les proportions de ferrite, d'eau et d'agents tensio-actifs sont variables selon les applications envisagées, c'est à dire selon la densité d'enregistrement, faible ou forte, pour des longueurs d'ondes comprises entre 5 et 500 microns.

La figure 4 représente une vue en coupe d'un fragment d'image obtenue avec le dispositif de l'invention. Les échelles relatives sont conventionnellement adaptées pour que la figure soit plus aisément lisible. La couche sensible est comprise entre le bloc transparent 14 et la membrane métallisée 16. Lorsque la loupe est posée sur un support magnétique enregistré, le champ magnétique des signaux déplace les particules de ferrite, qui migrent et forment des "barres" telles que 20, 21 et 22. Des barres sont représentées sur la figure 4: elles correspondent à des signaux numériques. Si les signaux enregistrés sont analogiques, les amas de particules 20, 21 et 22 ont des flancs moins abrupts, mais néanmoins les régions telles que 23 et 24, comprises entre les amas de particules, sont libres de toutes particules puisqu'elles ont migré, ce qui améliore la qualité de l'image obtenue.

La suspension de ferrite étant de couleur grise sombre, l'image d'un enregistrement numérique est rendue par une alternance de bandes presque noires — les particules de ferrite — séparées par des bandes métalliques bien visibles, qui correspondent aux régions de la membrane métallisée dégagées de particules de ferrite. La qualité de l'image est encore améliorée en colorant la suspension, en fonction de la densité d'enregistrement à lire, avec une substance telle que la fluorescéine.

Outre ses qualités de netteté et de contraste, l'image d'un enregistrement magnétique donné par la loupe est stable, ce qui lui confère une propriété de mémoire. Puisque les particules de ferrite se déplacent selon les polarités magnétiques, et passent d'une première position stable à une autre position stable, il devient possible de retirer la loupe du support d'enregistrement sur lequel elle a été posée. Sous la seule condition d'éviter les chocs ou vibrations extérieurs, l'image demeure, ce qui permet:

— soit de la photographier, puisqu'elle est nettement contrastée en noir sur blanc, de façon plus nette que dans l'art connu;

— soit de l'analyser de façon quantitative au moyen d'appareils optiques tels que loupe, binoculaire, microscope, photodensitomètre;

— soit de la comparer à des enregistrements de référence.

L'effacement de l'image, en vue d'une nouvelle utilisation de la loupe, est obtenu en remettant en suspension les particules de ferrite, par passage d'un doigt sur la membrane qui jouit d'une certaine souplesse.

Parmi les ferrites doux, l'un des plus efficaces a une composition ternaire, comportant de 50 à 60% (en moles) d'oxyde de fer ($Fe_2O_3$), de 20 à 40% d'oxyde de manganèse (MnO) et de 10 à 30% d'oxyde de zinc (ZnO).

La ferrite utilisé peut être préparé par un procédé classique, selon lequel les oxydes, après un premier mélange à sec sont broyés en milieu humide dans des broyeurs à billes. Les boues (barbotines) récupérées sont séchées, puis granulées; un préfrittage est exécuté dans un four rotatif aux environs de 1000° C.

Au cours de cette opération, il y a une première formation de ferrite.

Le granulé hétérogène récupéré après ce traitement thermique fait l'objet d'un nouveau broyage avant atomisation et frittage.

Une dernière opération de broyage permet l'obtention d'un poudre ayant la granulométrie désirée pour l'utilisation prévue dans cette loupe magnétique.

Cependant, de nouveaux procédés peuvent être avantageusement exploités dans le cas particulier de l'utilisation présente.

Il s'agit par exemple de coprécipitations d'hydroxydes, cogrillages de sels, lyophilisation ou sublimation sous vide, etc.

Ces différents procédés présentent les avantages suivants:

— une composition chimique très précise et homogène;

— une meilleure réactivité: particules très fines et plus homogènes;

— un frittage à plus basse température.

La suspension liquide qui constitue le film révélateur comprend de 1 à 4% en volume d'agent mouillant et de 1 à 8% d'agent dispersant. La proportion de ferrite varie selon l'utilisation de la loupe: en optique classique, cette notion s'exprimerait par le terme de grossissement de la loupe. Pour une granulométrie de poudre comprise entre 0,2 et 10 microns, la suspension contient de 5 à 15 mg de poudre sèche dans 500 mg de liquide, si la densité des signaux électriques sur le support magnétique est comprise entre 10 et 75 bpi (bit par inch). Pour la même granulométrie, mais pour des densités d'informations comprises entre 75 et 150 bpi ou entre 150 et 300 bpi, la quantité de poudre est respectivement de 2 à 10 mg et de 1 à 4 mg.

**Revendications**

1. Dispositif de visualisation de signaux enregistrés sur un support magnétique comprenant un bloc rigide de matériau transparent amagnétique bordant une cavité étanche fermée par une membrane disposée du côté où le dispositif est destiné à être mis en contact avec le support magnétique, ladite cavité contenant une suspension liquide comprenant des particules fortement ferro-magnétiques se déplaçant sous l'action du champ magnétique du support magnétique lorsque le dispositif est placé a proximité de celui-ci, de manière à visualiser l'information magnétique, grâce à la formation d'amas stable dans le temps séparés par des régions dépourvues de particules, la visualisation étant effaçable en remettant en suspension les particules, caractérisé en ce que les particules sont en ferrite doux et en ce que la membrane (16) est souple de telle sorte que ladite visualisation puisse être effacée par passage d'un doigt sur la membrane souple (16), sans recours à aucun dispositif annexe.

2. Dispositif selon la revendication 1, caractérisé en ce que la membrane souple (16) a une épaisseur comprise entre 5 et 100 microns.

3. Dispositif selon la revendication 2, caractérisé en ce que la membrane souple (16) est métallique.

4. Dispositif selon la revendication 2, caractérisé en ce que la membrane souple (16) est en polymère organique métallisé sur sa face tournée vers la cavité (15).

5. Dispositif de visualisation de signaux enregistrés sur support magnétique, comprenant un bloc rigide de matériau transparent amagnétique, bordant une cavité étanche que clôt une membrane, la cavité contenant une suspension liquide comprenant des particules fortement ferro-magnétiques se déplaçant sous l'action du champ magnétique du support magnétique lorsque le dispositif est placé à proximité de celui-ci, de manière à visualiser l'information magnétique, grâce à la formation d'amas stables dans le temps séparés par des régions dépouvues de particules, la visualisation étant effaçable en remettant en suspension les particules, caractérisé en ce que la suspension liquide comprend des particules de ferrite doux de composition ternaire contenant (en moles) de 50 à 60% de $Fe_2O_3$, de 20 à 40% de MnO et de 10 à 30% de ZnO.

6. Dispositif selon la revendication 5, caractérisé en ce que les particules de ferrite doux ont une granulométrie comprise entre 0,02 et 10 microns.

7. Dispositif selon la revendication 6, caractérisé en ce que la suspension contient entre 1 et 15 mg de poudre de ferrite doux pour 500 mg de liquide.

8. Dispositif selon l'une des revendications 5 à 7, caractérisé en ce que la cavité (15) est fermée par une membrane souple (16) de telle sorte que la visualisation puisse être également effacée par passage d'un doigt sur la membrane souple.

9. Dispositif selon la revendication 8, caractérisé en ce que la membrane souple (16) a une épaisseur comprise entre 5 et 100 microns.

10. Dispositif selon la revendication 9, caractérisé en ce que la membrane souple (16) est métallique.

11. Dispositif selon la revendication 9, caractérisé en ce que la membrane souple (16) est en polymère organique métallisé sur sa face tournée vers la cavité (15).

**Patentansprüche**

1. Vorrichtung zur Sichtbarmachung von auf einem magnetischen Träger aufgezeichneten Signalen, mit einem starren Block aus amagnetischem transparenten Material, der eine dichte Kavität umsäumt, welche auf der Seite, auf der die Vorrichtung mit dem magnetischen Träger in Berührung gebracht werden soll, durch eine Membran verschlossen ist und welche eine flüssige Suspension von stark ferromagnetischen Partikeln enthält, die sich unter dem Einfluß der magnetischen Feldes des magnetischen Trägers verschieben, wenn die Vorrichtung in dessen Nähe gebracht ist, derart, daß die magnetische Information aufgrund der Bildung von zeitlich stabilen Haufen, die durch Zonen ohne Partikel gegeneinander abgesetzt sind, sichtbar wird und das Bild löschbar ist, indem die Partikel wieder in Suspension gebracht werden, dadurch gekennzeichnet, daß die Partikel aus Weicheisen bestehen und daß die Membran (16) nachgiebig ist, derart, daß das Bild einfach durch Überstreichen der nachgiebigen Membran (16) mit einem Finger ohne ein zusätzliches Hilfsmittel gelöscht wird.

2. Vorrichtung nach Anspruch 1, dadurch gekennzeichnet, daß die nachgiebige Membran (16) eine Dicke zwischen 5 und 100 Mikrometer besitzt.

3. Vorrichtung nach Anspruch 2, dadurch gekennzeichnet, daß die nachgiebige Membran (16) aus Metall besteht.

4. Vorrichtung nach Anspruch 2, dadurch gekennzeichnet, daß die nachgiebige Membran (16) aus einem organischen Polymer besteht und an ihrer der Kavität (15) zugewandten Oberfläche metallisiert ist.

5. Vorrichtung zur Sichtbarmachung von auf einem magnetischen Träger aufgezeichneten Signalen, mit einem starren Block aus amagnetischem Material, der eine dichte Kavität umsäumt, welche von einer Membran verschlossen wird, wobei die Kavität eine flüssige Suspension mit stark ferromagnetischen Partikeln enthält, die sich unter dem Einfluß des magnetischen Feldes des magnetischen Trägers verschieben, wenn die Vorrichtung in dessen Nähe gebracht ist, derart, daß die magnetische Information aufgrund der Bildung von zeitlich stabilen Haufen, die durch Zonen ohne Partikel gegeneinander abgesetzt sind, sichtbar wird und das Bild löschbar ist, indem die Partikel wieder in Suspension gebracht werden, dadurch gekennzeichnet, daß die flüssige Suspension Partikel aus Weicheisen einer ternären Zusammensetzung enthält, die (in Mol) aus 50 bis 60% $Fe_2O_3$, 20 bis 40% MnO und 10 bis 30% ZnO besteht.

6. Vorrichtung nach Anspruch 5, dadurch gekennzeichnet, daß die Weicheisenpartikel eine Korngröße zwischen 0,02 und 10 Mikrometer aufweisen.

7. Vorrichtung nach Anspruch 6, dadurch gekennzeichnet, daß die Suspension zwischen 1 und 15 mg Weicheisenpulver in 500 mg Flüssigkeit enthält.

8. Vorrichtung nach einem der Ansprüche 5 bis 7, dadurch gekennzeichnet, daß die Kavität (15) mit einer nachgiebigen Membran (16) so verschlossen ist, daß das Bild auch durch Überstreichen der nachgiebigen Membran mit einem Finger gelöscht werden kann.

9. Vorrichtung nach Anspruch 8, dadurch gekennzeichnet, daß die nachgiebige Membran (16) eine Dicke zwischen 5 und 100 Mikrometer aufweist.

10. Vorrichtung nach Anspruch 9, dadurch gekennzeichnet, daß die nachgiebige Membran (16) aus Metall ist.

11. Vorrichtung nach Anspruch 9, dadurch gekennzeichnet, daß die nachgiebige Membran (16) aus einem organischen Polymermaterial besteht und an der der Kavität (15) zugewandten Oberfläche metallisiert ist.

**Claims**

1. A device for visually displaying signals which are recorded on a magnetic support, comprising a rigid block made of a non-magnetic transparent material, this block surrounding a tight cavity which is closed on the side conceived to get in contact with the magnetic support by a diaphragm, said cavity containing a liquid suspension of highly ferromagnetic particles which are displaced under the action of the magnetic field of the magnetic support when the device is placed adjacent thereto, in such a way that the magnetic information is made visible due to the formation of heaps which are stable in time and which are mutually separated by regions without any particles, the display being erasable by getting the particles again in suspension, characterized in that the particles are made of soft ferrite and that the diaphragm (16) is a soft diaphragm in such a way that said visualization can be erased by passing with a finger over the soft diaphragm (16) without the aid of any additional device.

2. A device according to claim 1, characterized in that the thickness of the soft diaphragm (16) is chosen between 5 and 100 micrometers.

3. A device according to claim 2, characterized in that the soft diaphragm (16) is a metal diaphragm.

4. A device according to claim 2, characterized in that the soft diaphragm (16) is made of an organic polymer material which is metal-coated on its face turned towards the cavity (15).

5. A device for visually displaying signals which are recorded on a magnetic support, comprising a rigid block made of a non-magnetic transparent material, this block surrounding a tight cavity which is closed by a diaphragm, the cavity containing a liquid suspension of highly ferromagnetic particles which are displaced under the action of the magnetic field of the magnetic support when the device is placed adjacent thereto, in such a way that the magnetic information is made visible due to the formation of heaps which are stable in time and which are mutually separated by regions without any particles, the display being erasable by getting the particles again in suspension, characterized inn that the liquid suspension comprises particles of soft ferrite having a ternary composition containing (in moles) 50 to 60% of $Fe_2O_3$, 20 to 40% of MnO and 10 to 30% of ZnO.

6. A device according to claim 5, characterized in that the grain size of the particles of soft ferrite is chosen between 0,02 and 10 micrometers.

7. A device according to claim 6, characterized in that the suspension contains between 1 and 15 mg of soft ferrite powder in 500 mg of liquid.

8. A device according to one of claims 5 to 7, characterized in that the cavity (15) is closed by a soft diaphragm (16) in such a way that the display can also be erased by passing with a finger over the soft diaphragm.

9. A device according to claim 8, characterized in that the thickness of the soft diaphragm (16) is chosen between 5 and 100 micrometers.

10. A device according to claim 9, characterized in that the soft diaphragm (16) is a metal diaphragm.

11. A device according to claim 9, characterized in that the soft diaphragm (16) is made of an organic polymer material and is metal-coated on its face turned towards the cavity.

Fig. 1

Fig. 2

# FIG.3

18

14  15  16  19  17

# FIG.4

14

20  23  21  24  22  16